Europäisches Patentamt

European Patent Office

Office européen des brevets

(19)

(11) Veröffentlichungsnummer: **0 266 571**
**A1**

(12) **EUROPÄISCHE PATENTANMELDUNG**

(21) Anmeldenummer: 87114559.5

(22) Anmeldetag: 06.10.87

(51) Int. Cl.⁴: **B01D 53/34**

(30) Priorität: 08.10.86 DE 3634206
10.06.87 DE 3719284

(43) Veröffentlichungstag der Anmeldung:
**11.05.88 Patentblatt 88/19**

(84) Benannte Vertragsstaaten:
**AT BE CH DE ES FR GB IT LI LU NL SE**

(71) Anmelder: **KRC Umwelttechnik GmbH**
**Alfred-Nobel-Strasse 20**
**D-8700 Würzburg 1(DE)**

(72) Erfinder: **Gutmayer, Harald, Dr.**
**Den Haager Weg 16**
**D-8700 Würzburg 1(DE)**
Erfinder: **Kelm, Wieland, Dr.**
**Leinacher Weg 13 b**
**D-8705 Zellingen(DE)**

(74) Vertreter: **Werner, Hans-Karsten, Dr. et al**
**Deichmannhaus am Hauptbahnhof**
**D-5000 Köln 1(DE)**

(54) **Verfahren zur Entsorgung von nassen Rauchgasentschwefelungsanlagen.**

(57) Das Verfahren zur Entsorgung von mit Kalkstein oder Calciumhydroxid als Adsorptionsmittel betriebenen nassen Rauchgasentschwefelungsanlagen durch Herstellungtrockener, deponiefähiger Endprodukte ist dadurch gekennzeichnet, daß die chloridhaltige Suspension von Calciumsulfat-Dihydrat aus dem Unterlauf eines Hydrozyklons einer Rauchgasentschwefelungsanlage mit Oxidation direkt in eine Sprühtrocknungsanlage geleitet und dort mit Rauchgas nach der Luftvorwärmung (LUVO) zu einem trockenen, festen Endprodukt verarbeitet wird, enthaltend Calciumsulfate, Calciumchlorid und sonstige feste Verunreinigungen des ursprünglich eingesetzten Adsorptionsmittels sowie gegebenenfalls des Rauchgases. Vorzugsweise erfolgt nach der Sprühtrocknung und vor der Entschwefelung eine Staubabscheidung.

## Verfahren zur Entsorgung von nassen Rauchgasentschwefelungsanlagen

Gegenstand der vorliegenden Erfindung ist ein Verfahren zur Entsorgung von mit Kalkstein oder Calciumhydroxid als Adsorptionsmittel betriebenen nassen Rauchgasentschwefelungsanlagen durch Herstellung trockener, deponiefähiger Endprodukte, insbesondere eines trockenen, festen Endproduktes, enthaltend Calciumsulfate, Calciumchlorid und sonstige feste Verunreinigungen des ursprünglich eingesetzten Adsorptionsmittels sowie gegebenenfalls des Rauchgases.

Durch die gesetzlich vorgeschriebene Entschwefelung von Rauchgasen auch kleinerer Kraftwerke entsteht das Problem, die inzwischen entwickelten Verfahren zur nassen Entschwefelung dahingehend zu vereinfachen, daß nach Möglichkeit nur ein einziges Abfallprodukt entsteht, das entweder weiterverarbeitet oder problemlos in eine Deponie verbracht werden kann. Für die Betreiber von kleineren Kraftwerken und Verbrennungsanlagen ist es nahezu unzumutbar, obendrein auch noch eine Abwasseraufbereitung für die Entschwefelungsanlage zu investieren und zu betreiben. Es sind deshalb auch schon trockene und halbtrockene Verfahren zur Entschwefelung entwickelt worden, bei denen nur trockene Adsorptionsmittel eingesetzt werden bzw. Suspensionen und Lösungen von Adsorptionsmitteln, wobei jedoch der Wassergehalt dieser Adsorptionsmittel bereits während der Rauchgasentschwefelung völlig verdampft, so daß nur ein festes Endprodukt entsteht. Der Nachteil dieser Verfahren besteht unter anderem darin, daß diese Restprodukte meistens einen erheblichen Gehalt an Sulfiten aufweisen, wodurch die Verbringung auf eine Deponie wesentlich problematischer wird.

Aus der DE-OS 29 28 526 ist ein Verfahren zum Entfernen saurer Komponenten aus Abgasen bekannt, bei dem die Abgase hinter dem Luftvorwärmer einer Kesselanlage abgezogen, sodann einer Entstaubungsanlage, einer Entschwefelungsanlage und dem Abgaskamin zugeführt werden, wobei ein kleinerer Teil der Abgase der Kesselanlage vor dem Luftvorwärmer entnommen, einem Sprühverdampfer und daran anschließend einem Abscheider zugeführt und sodann dem Hautabgasstrom vor und/oder hinter der Entstaubungsanlage beigemischt werden, wobei die in der Entschwefelungsanlage anfallende Waschlösung ganz oder teilweise dem Sprühverdampfer zugeführt wird. Der vor der Luftvorwärmung entnommene Abgasanteil weist eine so hohe Temperatur auf, daß nur eine geringe Abgasmenge zur Eindampfung der Waschlösung aus der Entschwefelungsanlage benötigt wird. Dieses Verfahren ist offensichtlich geeignet für Entschwefelungsanlagen, die mit Ammoniak als Entschwefelungsmittel arbeiten, da die Oxidation des abgeschiedenen Sulfits in einer separaten Oxidationsstufe erfolgt und als Endprodukt trockenes Ammoniumsulfat anfällt. In derartigen Entschwefelungsanlagen auf Basis von Ammoniak liegen völlig andere Mengen-und Gleichgewichtsverhältnisse vor als bei Rauchgasentschwefelungsanlagen mit Hilfe von Kalkstein oder Calciumhydroxid als Adsorptionsmittel.

Es bestand somit die Aufgabe, insbesondere für kleinere Kraftwerke und Verbrennungsanlagen nasse Rauchgasentschwefelungsanlagen zu entwickeln, welche das zunächst gebildete Sulfit vollständig zum Sulfat oxidieren, um damit ein wiederverwendbares oder deponiefähiges Endprodukt zu erhalten, darüber hinaus aber das Verfahren so zu modifizieren, daß es abwasserfrei arbeitet. Besonders schwierig ist dies dann durchzuführen, wenn die Rauchgase außer Schwefeldioxid auch Chloride enthalten, da diese nach der Adsorption zu löslichen Salzen führen, insbesondere Calciumchlorid. Noch größere Schwierigkeiten entstehen, wenn die Abgase von Müllverbrennungsanlagen zu reinigen sind, da diese meistens erhebliche Mengen eines sehr feinteiligen, schwermetallhaltigen Staubes enthalten.

Die Aufgabe konnte überraschend einfach dadurch gelöst werden, daß die chloridhaltige Suspension von Calciumsulfat-Dihydrat aus dem Unterlauf eines Hydrozyklons einer Rauchgasentschwefelungsanlage mit Oxidation direkt in eine Sprühtrocknungsanlage geleitet und dort mit Rauchgas nach der Luftvorwärmung (LUVO) zu einem trockenen, festen Endprodukt verarbeitet wird, enthaltend Calciumsulfat, Calciumchlorid und sonstige feste Verunreinigungen des ursprünglich eingesetzten Adsorptionsmittels sowie gegebenenfalls des Rauchgases.

Nach dem Stand der Technik wurde bisher der Unterlauf eines Hydrozyklons auf eine Filteranlage geleitet, wobei das Filtrat teilweise in die Rauchgasentschwefelungsanlage zurückgeleitet werden konnte, teilweise jedoch als Abwasser anfiel. Der Filterrückstand war ein mehr oder weniger reines Calciumsulfat-Dihydrat, enthaltend sonstige feste Verunreinigungen des ursprünglich eingesetzten Adsorptionsmittels sowie gegebenenfalls des Rauchgases. Das Filtrat wurde vor allem in dem Maße aus dem Verfahren der Rauchgasentschwefelungsanlage ausgeschleust, wie der Chloridgehalt zu sehr angestiegen war.

Es war somit nötig, ein calciumchloridhaltiges Abwasser separat aufzuarbeiten.

Nach dem erfindungsgemäßen Verfahren wird hingegen die gesamte chloridhaltige Suspension von Calciumsulfat-Dihydrat aus dem Unterlauf eines Hydrocyclons der Rauchgasentschwefelungsanlage direkt in eine Sprühtrocknungsanlage geleitet und dort mit Rauchgas nach der Luftvorwärmung (LUVO) zu einem trockenen, festen Endprodukt verarbeitet. Gegen diese Vorgehensweise bestand bisher in der Fachwelt ein schwerwiegendes Vorurteil, da es als unverantwortliche Energievergeudung angesehen wurde, so große Wassermengen zu verdampfen, wie sie ohne Vorkonzentration in Entschwefelungsanlagen auf Basis von Kalkstein oder Calciumhydroxid als Adsorptionsmittel anfallen, anstatt die zu verdampfende Wassermenge so klein wie möglich zu halten. Es hat sich jetzt jedoch herausgestellt, daß das erfindungsgemäße Verfahren nicht mehr Energie verbraucht als herkömmliche Verfahren, jedoch die Vorteile eines hochwirksamen, nassen Rauchgasentschwefelungsverfahrens mit den Vorteilen trockener bzw. halbtrockener Entschwefelungsverfahren kombiniert.

Dadurch, daß das ungereinigte Rohgas in der Sprühtrocknungsanlage dazu verwendet wird, die gesamte chloridhaltige Suspension von Calciumsulfat-Dihydrat aus dem Unterlauf eines Hydrozyklons einzutrocknen, kühlt es sich bereits etwas ab und verringert sich der Aufwand für die Konditionierung des Rauchgases für die Rauchgasentschwefelung. Die von dem Rauchgas aus der Sprühtrocknungsanlage mitgerissenen, feinteiligen Staubteilchen stören bei der Rauchgasentschwefelung nicht, sondern bilden sogar wertvolle Kristallisationskeime.

Ein weiterer Vorteil des erfindungsgemäßen Verfahrens besteht darin, daß die bisher übliche Filtration und Trocknung des Rauchgasgipses entfällt, deren Investition und Betreibung mit zusätzlichen Kosten verbunden waren.

Die erfindungsgemäß notwendige Sprühtrocknungsanlage ist hingegen sowohl von der Investition wie auch von den Kosten für die Betreibung relativ niedrig.

Ein weiterer Vorteil des erfindungsgemäßen Verfahren ist, daß das eingesetzte Rohgas nicht oder nicht sehr gründlich entstaubt werden muß, da zunächst in der Sprühtrocknungsanlage und dann in der Rauchgasentschwefelungsanlage auch der Flugstaub völlig entfernt wird. Er wird dabei miteingebaut in das trockene und feste Endprodukt, das dann auf die Deponie oder in eine Weiterverarbeitungsanlage gelangt.

Ein weiterer Vorteil des erfindungsgemäßen Verfahrens besteht darin, daß es möglich ist, je nach Temperaturen des Rohgases nach der Luftvorwärmung das Calciumsulfat-Dihydrat bei der Sprühtrocknung partiell zu dehydratisieren, so daß neben dem trockenen Calciumsulfat-Dihydrat auch steigende Mengen abbindefähiger Calciumsulfat-Halbhydrate entstehen. Dies kann insbesondere dann von Vorteil sein, wenn das trockene und feste Endprodukt zusammen mit anderen Komponenten weiterverarbeitet werden soll.

Ein weiterer Vorteil des erfindungsgemäßen Verfahrens besteht darin, daß bei der Durchleitung des Rauchgases durch die Sprühtrocknungsanlage ein Teil des Chloridgehaltes von dem trockenen, festen Endprodukt absorbiert wird und somit bereits zusammen mit dem Endprodukt aus dem Rauchgas ausgeschleust wird. Dies führt zu einer geringeren Chloridbelastung der Rauchgasentschwefelungsanlage. Es ist somit erfindungsgemäß möglich, insbesondere bei chloridreichen Brennstoffen die Bedingungen in der Rauchgasentschwefelungsanlage materialmäßig zu optimieren.

Im Gegensatz zu dem bekannten Verfahren, bei welchem mit einem Teilstrom der heißen Luft vor der Vorwärmung (LUVO) ein Teilstrom der Ammoniumsulfat enthaltenden Abwässer eingedampft wird, wird erfindungsgemäß der überwiegende oder gesamte Luftstrom nach der Luftvorwärmung durch die Sprühtrocknungsanlage geleitet. Es tritt somit der beobachtete Vorreinigungseffekt praktisch bei der gesamten Rauchgasmenge ein.

Weitere Untersuchungen haben ergeben, daß es sehr vorteilhaft sein kann, nach der Sprühtrocknung und vor der Rauchgasentschwefelung eine Entstaubung durchzuführen. Hierdurch wird der Naßwäscher in erheblichem Maße von dem zirkulierten Feststoff entlastet. Dieser fest abgeschiedene Staub muß daher nicht nochmals durch die Sprühtrocknungsanlage geführt werden. Die Staubabscheidung nach der Sprühtrocknung kann beispielsweise durch einen Staubzyklon erfolgen. Der dabei anfallende Staub entspricht in seiner Zusammensetzung dem trockenen Produkt, welches in der Sprühtrocknungsanlage anfällt. Es kann daher ohne weiteres mit diesem vereinigt und abtransportiert werden. Da es unter Umständen durch die Windsichtung eine kleinere Korngrößenverteilung aufweist, kann es aber auch separat aufgefangen und weiterverarbeitet werden.

Eine weitere Möglichkeit der Entstaubung besteht im Einsatz von Trockenfiltern mit Filtertüchern. Diese Art der Entstaubung ist besonders dann zu empfehlen, wenn es sich um Abgase aus Müllverbrennungsanlagen handelt, welche meistens einen sehr feinteiligen und - schwermetallhaltigen Staub aufweisen. Durch eine derartig intensive Entstaubung vor der Entschwefelung würde die Entschwefelungsanlage in erheblichem Maße von den Schwermetallen entlastet, so daß auch die geringen Mengen Staub in den gereinigten Abgasen geringere Anteile an Schwermetallen enthalten.

Eine dritte Möglichkeit der Entstaubung nach der Sprühtrocknung und vor der Rauchgasentschwefelung besteht im Einsatz von E-Filtern. Diese dritte Möglichkeit kommt insbesondere für Neuanlagen in Frage, bei denen dann das E-Filter zwischen der Luftvorwärmung und dem Sprühtrockner entfallen könnte. Auch bei dieser Variante des erfindungsgemäßen Verfahrens entspricht die Zusammensetzung des Staubes aus der Entstaubungsanlage weitgehend der Zusammensetzung des Produktes aus der Sprühtrocknungsanlage. Die beiden trockenen, deponiefähigen Endprodukte können somit wiederum zusammen oder getrennt weiterverarbeitet werden.

**Ansprüche**

1. Verfahren zur Entsorgung von mit Kalkstein oder Calciumhydroxid als Adsorptionsmittel betriebenen nassen Rauchgasentschwefelungsanlagen durch Herstellung trockener, deponiefähiger Endprodukte, dadurch gekennzeichnet, daß die chloridhaltige Suspension von Calciumsulfat-Dihydrat aus dem Unterlauf eines Hydrozyklons einer Rauchgasentschwefelungsanlage mit Oxidation direkt in eine Sprühtrocknungsanlage geleitet und dort mit Rauchgas nach der Luftvorwärmung (LUVO) zu einem trockenen, festen Endprodukt verarbeitet wird, enthaltend Calciumsulfate, Calciumchlorid und sonstige feste Verunreinigungen des ursprünglich eingesetzten Adsorptionsmittels sowie gegebenenfalls des Rauchgases.

2. Verfahren gemäß Anspruch 1, dadurch gekennzeichnet, daß nach der Sprühtrocknung und vor der Rauchgasentschwefelung eine Entstaubung erfolgt.

3. Verfahren gemäß Anspruch 2, dadurch gekennzeichnet, daß die Entstaubung durch einen Staubzyklon erfolgt.

4. Verfahren gemäß Anspruch 2, dadurch gekennzeichnet, daß die Entstaubung durch Trockenfilter mit Filtertüchern erfolgt.

5. Verfahren gemäß Anspruch 2, dadurch gekennzeichnet, daß die Entstaubung durch E-Filter erfolgt.

Europäisches
Patentamt

**EUROPÄISCHER RECHERCHENBERICHT**

Nummer der Anmeldung

EP 87 11 4559

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| A | FR-A-2 516 908 (L & C STEINMÜLLER GMBH) <br> * Anspruch 1; Figur 2 * <br> --- | 1,2 | B 01 D 53/34 |
| A | EP-A-0 097 240 (ROCKWELL INTERNATIONAL CORP.) <br> * vollständiges Dokument * <br> --- | 1-5 | |
| A | EP-A-0 108 249 (STEAG AG) <br> * Anspruch 1 * <br> ----- | | |

| | | |
|---|---|---|
| | RECHERCHIERTE SACHGEBIETE (Int. Cl.3) | |
| | B 01 D 53/00 | |

Der vorliegende Recherchenbericht wurde für alle Patentansprüche erstellt

| Recherchenort | Abschlußdatum der Recherche | Prüfer |
|---|---|---|
| BERLIN | 18-12-1987 | BERTRAM H E H |